# EUROPÄISCHE PATENTSCHRIFT

(11) **EP 0 849 850 B1**
(45) Veröffentlichungstag und Bekanntmachung des Hinweises auf die Patenterteilung: **11.07.2001**
(21) Anmeldenummer: 97118903.0
(22) Anmeldetag: 30.10.1997
(51) Int. Cl.: H02B 1/50

(54) **Freiluftgehäuse zur Aufnahme von Telekommunikationseinrichtungen und Verfahren zur Unterstützung von Freiluftgehäusen**
Outdoor cabinet for telecommunication devices and method for support of outdoor cabinets
Armoire extérieure pour des dispositifs de télécommunication et méthode pour le support d'armoires extérieures

(30) Priorität: 20.12.1996 DE 19654594
(43) Veröffentlichungstag der Anmeldung: 24.06.1998
(73) Patentinhaber: KRONE GmbH, 14167 Berlin (DE)
(72) Erfinder: Fadler, Georges, Dipl.-Ing., 10711 Berlin (DE); Sielaff, Michael, Dipl.-Ing., 12105 Berlin (DE); Fechner, Rainer, Dr.-Phys., 12524 Berlin (DE)

(56) Entgegenhaltungen:
- DE-C- 4 232 787
- DE-U- 7 029 992
- DE-U- 8 307 738
- US-A- 3 286 133
- US-A- 3 335 380

## Beschreibung

Die Erfindung betrifft ein Freiluftgehäuse zur Aufnahme von Telekommunikationseinrichtungen, umfassend ein Gestell zur Aufnahme der Telekom munikationseinrichtungen, einen Sockel, eine Bodenplatte und ein im Untergrund angeordnetes Sockelunterteil, sowie eine Verfahren zur Umrüstung von Freiluftgehäusen.

Bekannt sind Freiluftgehäuse, in denen Kabelverzweiger in einem Gestell angeordnet sind. Das Gestell ist mit einer Bodenplatte verbunden, unter der ein Sockel angeordnet ist. Der Sockel ist mit einem Sockelunterteil verbunden oder beide sind zusammen einstückig ausgebildet, wobei das Sockelunterteil in den Boden eingelassen ist. Das Sockelunterteil dient einerseits zur mechanischen Stabilisierung des Freiluftgehäuses, zum anderen werden durch das Sockelunterteil die in der Erde verlegten Telekommunikationskabel in das Innere des Freiluftgehäuses geführt. Nachteilig an den standardisierten Freiluftgehäusen ist deren beschränktes Aufnahmevermögen.

Um dem stetig wachsenden Informationsbedürfnis gerecht zu werden, ist es insbesondere in den Teilnehmeranschlußbereichen der Telekommunikationsnetze notwendig, neue Fernmelde- oder Datennetze zu installieren bzw. die Übertragungskapazität vorhandener Netze zu steigern. Dabei werden vorzugsweise bestehende Kupferdoppeladern durch Mehrfachausnutzung (Multiplexen) oder durch neue Übertragungstechniken (HDSL, ADSL, VDSL) erweitert, aber auch neue Strecken mittels Glasfaser (FTTC) oder Funktechniken (WLL) realisiert. Alle diese Techniken haben zur Folge, daß vermehrt elektrische Komponenten aus den Vermittlungsstellen oder fernmeldetechnischen Gebäuden dezentral vor Ort ausgelagert werden müssen. Dies bedeutet, daß in zunehmendem Maße Freiluftgehäuse zur Aufnahme von elektrischen Komponenten, von Kabelabschlüssen und nötigenfalls von Energieversorgungseinheiten benötigt werden.

Aus der US-3, 286, 133 ist ein nachrüstbares Freiluftgehäuse zur Aufnahme von Telekommunikationseinrichtungen bekannt, umfassend ein Gestell zur Aufnahme der Telekommunikatioseinrichtungen, einen Sockel und ein Gehäuse. Das Gehäuse umfaßt Seitenwände, die lösbar mittels einer Nut-Federverbindung an dem Gestell befestigt sind.

Der Erfindung liegt daher das technische Problem zugrunde, ein Freiluftgehäuse zur Aufnahme von Telekommunkationseinrichtungen und ein Verfahren zur Umrüstung von Freiluftgehäusen zu schaffen, daß einfacher durch eine Person umgerüstet bzw. durchgeführt werden kann.

Die Lösung des technischen Problems ergibt sich durch die Merkmale der Patentansprüche 1 und 5. Hierzu werden Modulgehäuse auf die Gestelle geschoben, an denen dann Türen und Seitenwände des gemeinsamen Gehäuses befestigt werden, wobei Gestelle, Sockel und Sockelteil des ursprünglichen Freiluftgehäuses weiterverwendet werden. Diese Modulgehäuse lassen sich aufgrund ihrer Eigenstabilität einfacher von einem Monteur entfernen bzw. montieren, so daß sich einfach voneinander separierte Teilmodule schaffen lassen. Weitere vorteilhafte Ausgestaltungen der Erfindungen ergeben sich aus den Unteransprüchen.

Die Erfindung wird nachfolgend anhand eines bevorzugten Ausführungsbeispiels näher erläutert. Die Figuren zeigen:
- Fig.1: eine Perspektivdarstellung mit Gestell, Modulgehäuse, Sockel und Sockelunterteil
- Fig.2: eine Perspektivdarstellung einer Zusammenstellung von Modulen im eingebauten Zustand mit Sockelverkleidung,
- Fig. 3: eine Perspektivdarstellung mit montierten Seitenwänden und Türen und

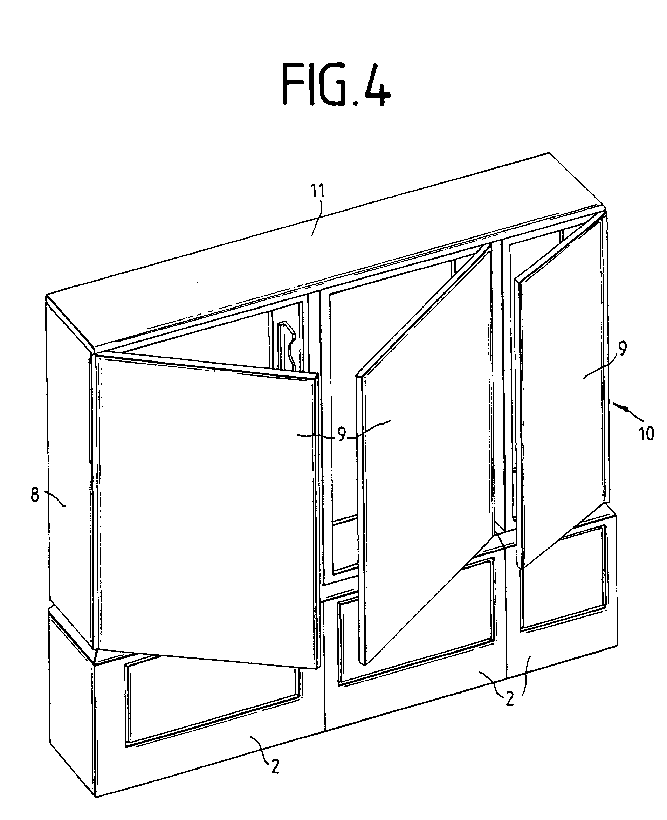

- Fig. 4: eine Perspektivdarstellung des kompletten Freiluftgehäuses.

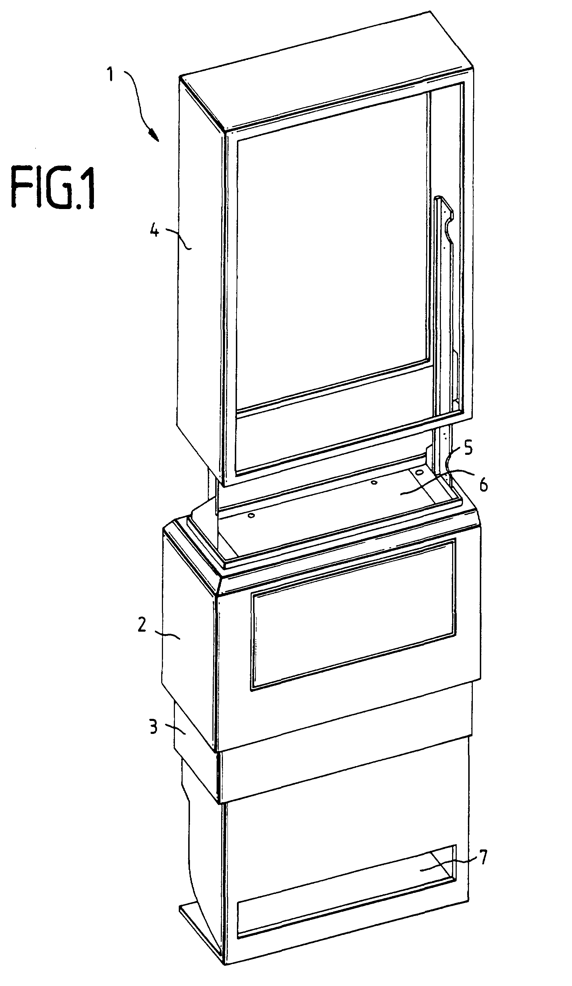

In der Fig. 1 ist ein Modul 1 mit Sockel 2 und Sockelunterteil 3 perspektivisch dargestellt. Das Modul 1 umfaßt ein Modulgehäuse 4 und ein Gestell 5, an dem die entsprechenden Telekommunikationseinrichtungen befestigt sind. Das Modulgehäuse 4 ist auf das Gestell 5 aufschiebbar ausgebildet. Das Gestell 5 ist mit einer Bodenplatte 6 verbunden, die wiederum mit dem darunter angeordneten Sockel 2 verbunden ist. Das aufgeschobene Modulgehäuse 4 kann bei Bedarf entweder mit dem Gestell 5 und/oder der Bodenplatte 6 lösbar verbunden werden. Das Sockelunterteil 3 ist mit dem Sockel 2 verbunden oder wird mit diesem zusammen einstückig gefertigt. Das Sockelunterteil 3 wird in den Untergrund eingebracht und dient als eine Art Fundament des Freiluftgehäuses. Des weiteren können über einen Schacht 7 unterirdisch verlegte Kabel ins Innere des Freiluftgehäuses geführt werden. Soll ein bereits existierendes Freiluftgehäuse umgerüstet werden, so wird von diesem nur das Gehäuse entfernt. Das Gestell 5 mit den Telekommunikationseinrichtungen, die Bodenplatte 6, der Sockel 2 und das Sockelunterteil 3 werden weiter verwendet und nur das neue Modulgehäuse 4 wird wie zuvor beschrieben auf das Gestell 5 aufgeschoben.

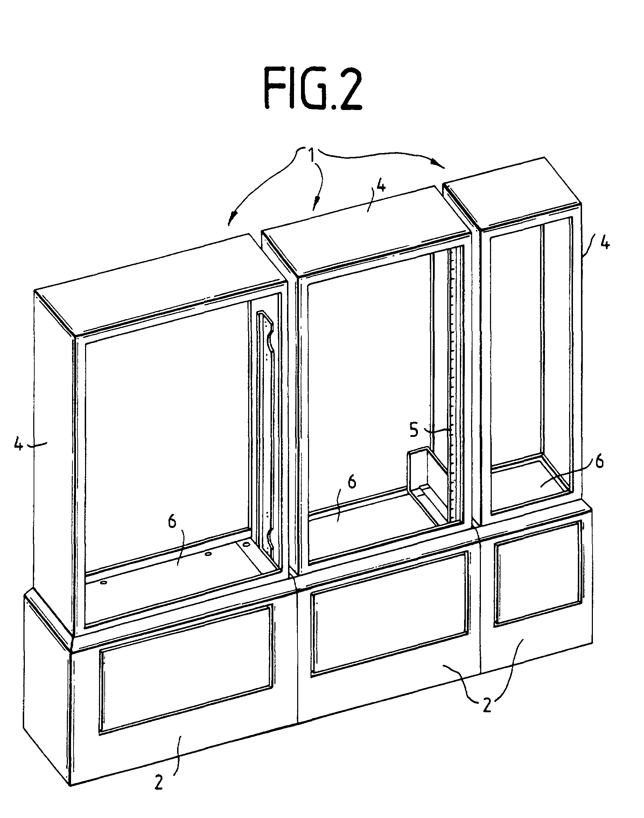

In der Fig. 2 ist eine Perspektivdarstellung einer Zusammenstellung von Modulen 1 mit ins Erdreich eingebrachten Sockelunterteilen 3 dargestellt. Je nach Bedarf werden weitere Module 1 mit Sockel 2 und gegebenenfalls Sockelunterteil 3 parallel zum ersten Modul 1 angeordnet. Die Verwendung separater Modulgehäuse 4 dient dazu, die einzelnen Module 1 unabhängig voneinander zugänglich zu gestalten. So können z.B. in einem Modul 1 der Kabelanschluß bereich, im zweiten Modul 1 die Elektronik und im dritten Modul 1 die lokale Stromversorgung untergebracht sein. Die einzelnen Module 1 können dabei völlig unterschiedliche geometrische Abmessungen aufweisen. Vorzugsweise unterscheiden diese sich jedoch nur in der Breite, da dadurch die später beschriebene Häusung einfacher zu realisieren ist und ein geschlossener optischer Gesamteindruck entsteht. Durch die einzelnen Modulgehäuse 4 kann sichergestellt werden, daß z.B. ein Wartungstechniker für die lokale Stromversorgung keinen Zugriff auf den Kabelabschlußbereich oder die Elektronik hat. Bei einer oben beschriebenen Konfiguration ist vorzugsweise das Modul 1 der lokalen Stromversorgung mit einem Sockelunterteil 3 ausgebildet, um einerseits die Gesamtkonstruktion statisch zu stabilisieren und andererseits unterirdisch verlegte Stromkabel ins Innere zu führen. Der Sockel 2 des Moduls 1 für die Elektronik kann vorzugsweise als belüftbares Batteriefach verwendet werden. Die notwendigen Kabelverbindungen zwischen Endverzweiger und der Elektronik erfolgt direkt vom Modul 1 zu Modul 1, ohne Umwege durch das Erdreich.

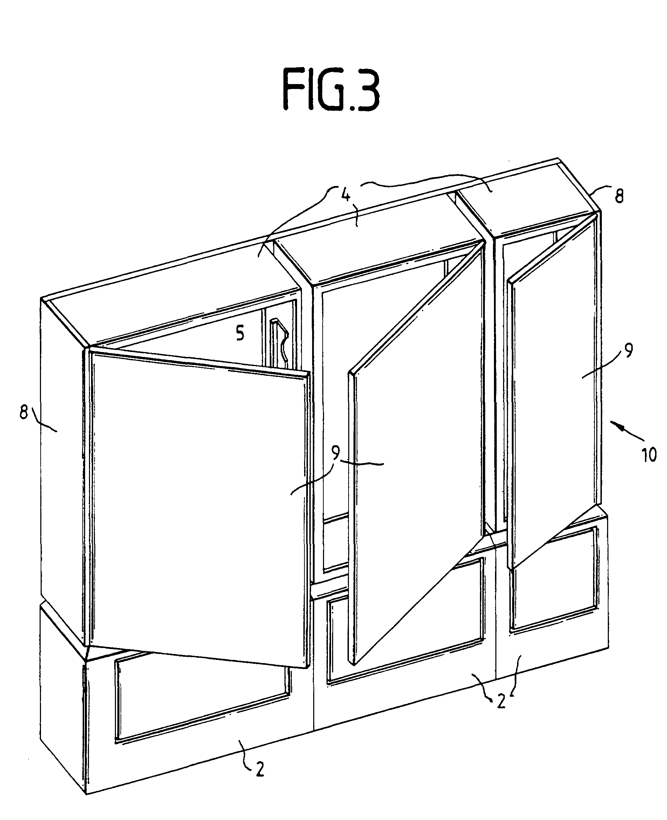

In der Fig.3 sind die zusammengestellten Module 1 mit montierten Seitenwänden 8 und Türen 9 dargestellt. Die Türen 9 sind dabei an den Modulgehäusen 4 angelenkt. Die Seitenwände 8 weisen dabei für eine ausreichende Belüftung nicht dargestellte Hohlräume auf. Die Seitenwände 8 können mit Modulgehäusen 4 verschraubt oder verrastet werden. Die Probleme die sich beim Aufstellen eines eigenständigen Gehäuses für die Elektronik in unmittelbarer Nachbarschaft eines existierenden Kabelverzweigers, wie z. B. notwendige Erdarbeiten zur Kabelverbindung, die Verunstaltung des Landschaftsbildes durch unterschiedlich aussehende und eventuell gegeneinander kippende Gehäuse, lassen sich mit dem beschriebenen Freiluftgehäuse 10 bzw. dem Verfahren zur Umrüstung von bereits existierenden Freiluftgehäusen vermeiden. Das Freiluftgehäuse 10 bietet neben mechanischem auch klimatischen und EMV-Schutz.

### Bezugszeichenliste

- 1): Modul
- 2): Sockel
- 3): Sockelunterteil
- 4): Modulgehäuse
- 5): Gestell
- 6): Bodenplatte
- 7): Schacht
- 8): Seitenwand
- 9): Tür
- 10): Freiluftgehäuse
- 11): Dachkonstruktion

## Patentansprüche

1. Verfahren zur Umrüstung von Freiluftgehäusen (10), umfassend ein Gehäuse, einen Sockel (2), ein Sockelunterteil (3) und ein Gestell (5) zur Aufnahme von Telekommunikationseinrichtungen, wobei das ursprüngliche Gehäuse des umzurüstenden Freiluftgehäuses entfernt wird, weitere Gestelle (5) mit Sockel (2) und wahlweise Sockelunterteil (3) am Gestell (5) des umzurüstenden Freiluftfgehäuses (10) angeordnet werden und Seitenwände (8), Türen (9) und eine Dachkonstruktion (11) befestigt werden,
**dadurch gekennzeichnet, daß**
auf die einzelnen Gestelle (5) Modulgehäuse (4) aufgeschoben werden, wobei die Seitenwände (8) und Türen (9) an den Modulgehäusen (4) befestigt werden.

2. Verfahren nach Anspruch 1, dadurch gekennzeichnet, daß die Seitenwände (8) und/oder die Türen (9) und/oder die Dackkonstruktion (11) mit einem Hohlraum ausgebildet sind.

3. Verfahren nach Anspruch 1 oder 2, dadurch gekennzeichnet, daß an den Sockeln (2) eine Sockelverkleidung befestigt wird.

4. Verfahren nach einem der vorangegangenen Ansprüche , dadurch gekennzeichnet, daß die Verbindungen der einzelnenTelekommunikationseinrichtungen oberirdisch von Modul (1) zu Modul (1) erfolgt.

5. Freiluftgehäuse zur Aufnahme von Telekommunikationseinrichtungen, umfassend ein Gestell (5) zur Aufnahme der Telekommunikationseinrichtungen, einen Sockel (2) und ein im Untergrund angeordnetes Sockelunterteil (3), wobei mindestens ein weiteres Gestell (5) mit Sockel (2) am ersten Gestell (5) angeordnet ist und die Gestelle (5) durch lösbar ausgebildete Seitenwände (8), Türen (9) und mindestens eine Dachkonstruktion (11) gemeinsam gehäust sind,
**dadurch gekennzeichnet, daß**
auf die einzelnen Gestelle (5) Modulgehäuse (4) aufgeschoben sind, an denen die Seitenwände (8) und Türen (9) befestigt sind.

6. Freiluftgehäuse nach Anspruch 5, dadurch gekennzeichnet, daß die Sockel (2) von einer separaten Sockelverkleidung umgeben sind, die lösbar mit den Seitenwänden (8) oder Sockeln (2) verbunden ist.

7. Freiluftgehäuse nach Anspruch 5 oder 6, dadurch gekennzeichnet, daß die Sockel (2) der weiteren Gestelle (5) wahlweise mit einem Sockelunterteil (3) ausgebildet sind.

8. Freiluftgehäuse nach einem der Ansprüche 5 bis 7, dadurch gekennzeichnet, daß die Seitenwände (8) und/oder die Türen (9) und/oder die Dackkonstruktion (11) mit einem Hohlraum gebildet sind.

9. Freiluftgehäuse nach einem der Ansprüche 5 bis 8, dadurch gekennzeichnet, daß die Telekommunikationseinrichtungen in den einzelnen Modulen (1) oberirdisch von Modul (1) zu Modul (1) miteinander verbunden sind.

## Claims

1. Method for equipping outdoor housings 10, comprising a housing, a base (2), a base lower part (3) and a frame (5) for accommodating telecommunications devices, the original housing of the outdoor housing to be equipped being removed, further frames (5) with a base (2) and, optionally, a base lower part (3) being arranged on the frame (5) of the outdoor housing (10) to be equipped, and side walls (8), doors (9) and a roof structure (11) being attached to the frame (5),
characterized in that module housings (4) are pushed onto the individual frames (5), the side walls (8) and the doors (9) being attached to the module housings (4).

2. Method according to Claim 1, characterized in that the side walls (8) and/or the doors (9) and/or the roof structure (11) are constructed with a cavity.

3. Method according to Claim 1 or 2, characterized in that base cladding is attached to the bases (2).

4. Method according to one of the preceding claims, characterized in that the connections of the individual telecommunications devices from module (1) to module (1) are made above ground.

5. Outdoor housing for accommodating telecommunications devices, comprising a frame (5) for accommodating the telecommunications devices, a base (2) and a base lower part (3) which is arranged under ground, at least one further frame (5) being arranged with the base (2) on the first frame (5), and the frames (5) being housed jointly by means of detachably constructed side walls (8), doors (9) and at least one roof structure (11), characterized in that module housings (4) are pushed onto the individual frames (5), to which module housings (4) the side walls (8) and doors (9) are attached.

6. Outdoor housing according to Claim 5, characterized in that the bases (2) are surrounded by separate base cladding which is detachably connected to the side walls (8) or bases (2).

7. Outdoor housing according to Claim 5 or 6, characterized in that the bases (2) of the further frames (5) are optionally constructed with a base lower part (3).

8. Outdoor housing according to one of Claims 5 to 7, characterized in that the side walls (8) and/or the doors (9) and/or the roof structure (11) are formed with a cavity.

9. Outdoor housing according to one of Claims 5 to 8, characterized in that the telecommunications devices in the individual modules (1) are connected to one another above ground from module (1) to module (1).

## Revendications

1. Procédé pour transformer des armoires extérieures (10), comprenant une enveloppe, un socle (2), une partie inférieure de socle (3) et un châssis (5) pour recevoir des dispositifs de télécommunication, dans lequel l'enveloppe originale de l'armoire extérieure à transformer est retirée, d'autres châssis (5) avec un socle (2) et avec au choix une partie inférieure de socle (3) sont agencés contre le châssis (5) de l'armoire extérieure à transformer (10) et des parois latérales (8), des portes (9) et une structure de toit (11) y sont fixées,
caractérisé en ce que sont glissées sur les différents châssis (5) des enveloppes modulaires (4) sur lesquelles sont fixées les parois latérales (8) et les portes (9).

2. Procédé selon la revendication 1, caractérisé en ce que les parois latérales (8) et/ou les portes (9) et/ou la structure de toit (11) sont formées avec un espace creux.

3. Procédé selon la revendication 1 ou 2,
caractérisé en ce qu'un habillage de socle est fixé sur les socles (2).

4. Procédé selon l'une quelconque des revendications précédentes, caractérisé en ce que les connexions des différents dispositifs de télécommunication se font par voie aérienne de module (1) à module (1).

5. Armoire extérieure pour la réception de dispositifs de télécommunication, comprenant un châssis (5) pour recevoir les dispositifs de télécommunication, un socle (2) et une partie inférieure de socle (3) agencée dans le sous-sol, dans laquelle au moins un autre châssis (5) avec un socle (2) est agencé contre le premier châssis (5) et les châssis (5) sont logés conjointement par des parois latérales (8), des portes (9) et par au moins une structure de toit (11) montées de manière amovible,
caractérisée en ce que sur les châssis individuels (5) sont glissées des enveloppes modulaires (4) sur lesquelles sont fixées les parois latérales (8) et les portes (9).

6. Armoire extérieure selon la revendication 5,
caractérisée en ce que les socles (2) sont entourés par un habillage de socle séparé qui est relié aux parois latérales (8) ou aux socles (2) de manière amovible.

7. Armoire extérieure selon la revendication 5 ou 6, caractérisée en ce que les socles (2) des autres châssis (5) sont formés au choix avec une partie inférieure de socle (3).

8. Armoire extérieure selon l'une quelconque des revendications 5 à 7, caractérisée en ce que les parois latérales (8) et/ou les portes (9) et/ou la structure de toit (11) sont formées avec un espace creux.

9. Armoire extérieure selon l'une quelconque des revendications 5 à 8, caractérisée en ce que les dispositifs de télécommunication dans les différents modules (1) sont connectés l'un à l'autre par voie aérienne de module (1) à module (1).
